(19) **Europäisches Patentamt**
**European Patent Office**
**Office européen des brevets**

(11) **EP 3 344 012 B1**

(12) **EUROPEAN PATENT SPECIFICATION**

(45) Date of publication and mention
of the grant of the patent:
**05.07.2023 Bulletin 2023/27**

(21) Application number: **17210912.6**

(22) Date of filing: **28.12.2017**

(51) International Patent Classification (IPC):
*H05B 45/10* (2020.01)    *H05B 45/46* (2020.01)
*H05B 45/347* (2020.01)    *H05B 45/395* (2020.01)
*B60Q 1/04* (2006.01)

(52) Cooperative Patent Classification (CPC):
**H05B 45/395; H05B 45/10; H05B 45/347;**
**H05B 45/46;** B60Q 1/04; Y02B 20/30

(54) **DRIVER CIRCUIT OF LIGHT SOURCES, IN PARTICULAR FOR A VEHICLE LIGHT**

TREIBERSCHALTUNG FÜR LICHTQUELLEN, INSBESONDERE FÜR EIN FAHRZEUGLICHT

CIRCUIT D'ATTAQUE DE SOURCES LUMINEUSES, EN PARTICULIER POUR UN PHARE DE VÉHICULE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **29.12.2016 IT 201600132337**

(43) Date of publication of application:
**04.07.2018 Bulletin 2018/27**

(73) Proprietor: **MARELLI AUTOMOTIVE LIGHTING**
**ITALY S.p.A.**
**10078 Venaria Reale (TO) (IT)**

(72) Inventors:
• **RUSSO, Gerardo**
**10078 Venaria Reale (Torino) (IT)**
• **MANFREDA, Giulio**
**10078 Venaria Reale (Torino) (IT)**
• **IELLINA, Matteo**
**10078 Venaria Reale (Torino) (IT)**

(74) Representative: **Chimini, Francesco**
**Jacobacci & Partners S.p.A.**
**Piazza Mario Saggin, 2**
**35131 Padova (IT)**

(56) References cited:
**EP-A1- 3 258 745**    **WO-A1-2013/076685**
**US-A1- 2006 108 933**    **US-A1- 2007 273 681**
**US-A1- 2010 134 040**    **US-A1- 2010 327 835**
**US-A1- 2016 302 270**

• **Power Integrations: "DPA422-426 DPA-Switch**
**Family Highly Integrated DC-DC Converter ICs for**
**Power over Ethernet & Telecom Applications**
**Output Power Table", , 1 June 2015 (2015-06-01),**
**XP055743336, Retrieved from the Internet:**
**URL:https://ac-dc.power.com/sites/default/**
**files/product-docs/dpa_family_datasheet.pd f**
**[retrieved on 2020-10-23]**

**Description**

The present invention relates to a control circuit of lighting sources, in particular for an automotive headlight. More precisely, the invention relates to an adaptive electronic control for one or more lighting sources that may undergo large variations of their activation voltage (Vforward), such as OLED or LED. Such variations of the activation voltage are due for example to a temperature change, or to a voltage selection or to a flow selection.

However, the invention can more generally be applied when there is the need to control a supply voltage as a function of variations of voltage drops on the branch comprising the lighting source to be supplied. Such variable voltage drops to be compensated are typically due to the activation voltage at the terminals of the lighting source, as mentioned above, but may also be caused by voltage drops on other devices connected in the lighting branch.

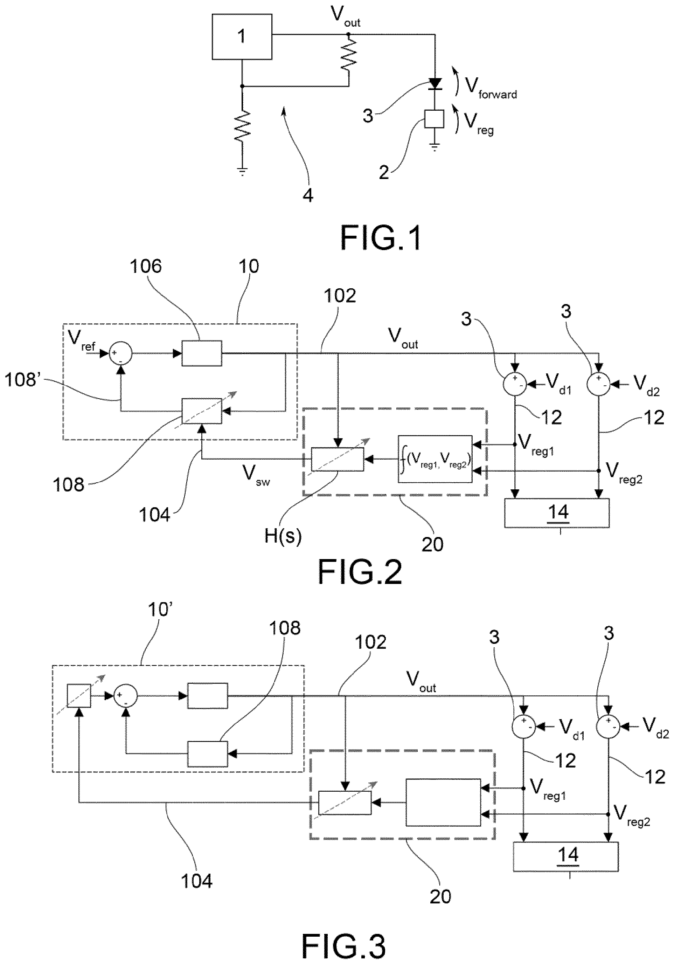

Conventionally, an adaptive control circuit provides for supplying a supply voltage via a power supply 1 according to the circuit diagram in figure 1. A current controller 2 is connected in series to the lighting source 3 to maintain the drive current of the lighting source at a predetermined value.

Typically, power supplies have a feedback circuit, for example implemented with a voltage divider 4 and an operational amplifier which compares a partition of the output voltage Vout with an internal reference voltage, so as to keep the output voltage constant.

In a conventional circuit of the type described in figure 1, a variation of the activation voltage Vforward of the lighting source 3 results in a variation of the voltage drop Vreg on the current controller 2. In some cases, a lowering of the voltage drop at the terminals of the lighting source may cause a large increase in the voltage on the current controller, with the result that the power absorbed by the controller or in general by the system must be used in some way. For example, the current controller or the electronic card will have to be oversized from the thermal point of view. A driver circuit for lighting sources according to the preamble of claim 1 is disclosed in US 2016/302270 and US 2010/327835 A1. US 2006/108933 A1 discloses a driving apparatus for LEDs including a DC-to-DC converter, a first constant-current circuit, a second constant-current circuit, and a feedback circuit. The DC-to-DC converter outputs a direct-current voltage according to a feedback voltage. US 2010/134040 A1 discloses a power source providing an output voltage to drive a plurality of light emitting diode (LED) strings. A feedback controller monitors the tail voltages of the LED strings to identify the minimum tail voltage and adjusts the output voltage based on a relationship between the minimum tail voltage and a reference voltage. WO 2013/076685 A1 discloses a LED driver circuit comprising switch driver circuit means suitable for generating a driver voltage which depends in a substantially linear manner on the power supply voltage. EP 3 258 745 A1 discloses an input voltage stabilization circuit for a plurality of organic light emitting diodes (OLED) in a rear combination lamp in a vehicle wherein a capacitor unit connected between a feedback node and ground eliminates ripple or noise applied to the feedback node. US 2007/273681 A1 discloses a circuit for providing power to one or more arrays of LEDs using a feedback selector circuit comprising one or more diodes to combine feedback signals received from the one or more LED arrays into a single feedback signal and using a capacitor acting as a valley detector to hold the lowest value of feedback signal and provide it to a controller.

The object of the present invention is to propose a control circuit of lighting sources, for example of the LED or OLED type, able to adjust the value of the supply voltage to variations in the voltage drop on the lighting sources and, compared to the above cited prior art solutions, which requires a limited number of elementary components, is more reliable and cost-effective.

In other words, the object of the invention is to maintain the voltage drop on the current controller at an optimal predetermined value upon the variation of the voltage drop on the lighting sources.

Said object is achieved with a control circuit according to claim 1 and with a vehicle light according to claim 11. The dependent claims describe preferred embodiments of the invention.

The application discloses that the control circuit comprises an adjustable voltage power supply, that is, having an accessible regulation terminal to adjust the value of the supply voltage on the power supply output terminal, at least one lighting branch supplied by the output supply voltage, said lighting branch comprising at least one lighting source, a current regulation device, such as a current controller, connected in series with a respective lighting branch and adapted to adjust the driving current circulating in said lighting branch, and a non-linear feedback network which supplies an adjustment signal to the adjustment terminal.

The non-linear feedback network has a transfer function which varies according to the voltage drop at the terminals of the current control device and which is adapted to change the value of the output supply voltage to bring the voltage drop at the terminals of the current control device to a predetermined value with at least two different dynamics, depending on whether said voltage drop at the terminals of the current regulation device is greater or smaller than said predetermined value.

For example, the transfer function has a fast dynamic in case of lowering of the voltage drop at the terminals of the current regulation device below the predetermined value, and a slow dynamic in case of increase of the voltage drop at the terminals of the current regulation device above said predetermined value. In particular, the slow dynamic is selected in such a way that an on-off modulation of the current of the current regulation device, for example for a power supply mode PWM of the lighting branch, is not controlled by the non-linear feedback network. The fast dynamic is instead selected so as to quickly adapt the level of the output supply voltage to higher values, so as to activate with the least possible delay a lighting branch which requires a greater voltage drop at its terminals to allow the powering of the lighting source.

Hence the need to have a transfer function of the non-linear feedback network with at least two different dynamics.

According to a first alternative of the claimed invention, the regulation terminal acts on an internal feedback control loop of the adjustable voltage power supply.

According to a second alternative of the claimed invention, the regulation terminal acts on a reference voltage setting network that defines the value of an internal reference voltage of the adjustable voltage power supply.

The non-linear feedback network comprises a feedback selector circuit.

According to the invention, this feedback selector circuit has a control node operatively connected to the regulation terminal, an upper branch that connects the control node to the output terminal of the adjustable power supply by means of a feedback impedance, for example made with a resistive element, a lower branch that connects the control node to ground by means of a capacitor, and at least one intermediate branch connecting the control node to a respective current regulation device by means of a respective diode. In this way, when the voltage at the terminals of the current regulation device falls below a voltage value given by the difference between the voltage of the control node and the forward voltage at the terminals of the diode, the capacitor will discharge quickly through the diode and the current regulation device. In this way, the value of the control node voltage varies rapidly and therefore the value of the output supply voltage also varies rapidly. For example, the discharge time of the capacitor is of the order of microseconds.

When instead the voltage at the terminals of the current regulation device exceeds the voltage value given by the difference between the voltage of the control node and the forward voltage at the terminals of the diode, the diode switches to a high impedance status, allowing the capacitor to charge through the resistive element. In this case, the dynamics of the non-linear feedback network transfer function is given by the time constant RC, where R is the feedback impedance value and C is the capacitance of the capacitor. For example, the values of R and C can be selected so as to implement a slow time constant RC, for example of the order of a few seconds. In this way, the value of the control node voltage varies according to such a slow time constant, and with it the value of the output supply voltage.

In an example which is not part of the claimed invention, the non-linear feedback network comprises a feedback selector circuit with active components, comprising a field effect transistor, such as a P-MOS (even though a bipolar transistor may be equivalently used) having the gate terminal connected to the output terminal of the adjustable power supply by means of a resistive element and connected to the current control device, the source terminal operatively connected to the control terminal and the drain terminal connected to ground by means of a resistance. The feedback network further comprises a capacitor connected between the source terminal and the drain terminal, and an operational amplifier having the inverting input terminal connected to the drain terminal, the non-inverting input terminal to a reference voltage, and the output terminal connected to the source terminal. In this way, when the voltage at the terminals of the current control device falls below the voltage value given, with good approximation, by the difference between the voltage of the source terminal and the gate-source threshold voltage of the P-MOS switch, the channel resistance of the P-MOS reduces rapidly so as to quickly discharge the capacitor placed between source and drain. In this way, the output of operational amplifier, and then the control node voltage value, varies rapidly. Due to the action of the control signal, the value of the output supply voltage also rapidly increases.

When the voltage at the terminals of the current regulation device exceeds the voltage value given by the difference between the voltage of the source terminal and the gate-source threshold voltage of the P-MOS, the P-MOS is cut off and the output of the operational amplifier, and thus the value of the control node voltage, varies according to the time constant RC given by the resistor connected between the inverting terminal of the amplifier and ground, and by the capacitor placed between drain and source. Due to the action of the control signal, the value of the output power supply voltage also decreases according to such a dynamic.

In a further example which is not part of the claimed invention, the non-linear feedback network is implemented using a microprocessor. For example, the non-linear feedback network comprises a multichannel analog-digital converter ADC adapted to detect the supply voltage in output to the adjustable power supply and the voltage drop at the terminals of each current control device, a microprocessor, and a digital-analog converter DAC adapted to generate the the control signal.

It should be noted that, while in the analog embodiments described above the analog circuit is affected by the changes in the voltage drop at the terminals of the current control device without continuously detecting such voltage drop, if not nonlinearly, in the embodiment by means of a microprocessor the voltage drop is directly detected and the nonlinearity is obtained via software.

In one embodiment, the feedback circuit of the adjustable power supply comprises an electrically adjustable impedance element having a control terminal connected to the output of the non-linear feedback network and through which it is possible to vary the value of such impedance based to a control signal supplied by the non-linear feedback network as a function of the voltage drop at the terminals of the current regulation device.

In one embodiment, the feedback circuit of the adjustable power supply comprises a voltage divider, comprising a first impedance between a feedback terminal and ground and a second impedance between the output terminal of the adjustable power supply and the feedback terminal. The second impedance in turn comprises a constant impedance and the electronically adjustable impedance element described above.

Therefore, depending on the value of the voltage drop at the terminals of the current regulation device, the variable impedance assumes different values that determine the overall impedance value which affects the feedback block of the adjustable power supply and thus the output supply voltage level.

According to an embodiment of the second alternative of the claimed invention, the adjustable power supply comprises a reference voltage setting network defining the internal reference voltage of the power supply. Such a setting network comprises an electrically adjustable impedance element having a control terminal connected to the output of the non-linear feedback network and through which it is possible to vary the value of such impedance based to a control signal supplied by the non-linear feedback network as a function of the voltage drop at the terminals of the current regulation device.

For example, the setting network comprises a constant impedance and the adjustable impedance element described above, mutually connected together in parallel.

In one embodiment, the impedances of the feedback circuit of the power supply or the reference voltage setting network may consist of resistors or capacitors with varicap.

Further features and the advantages of the control circuit according to the invention shall be made readily apparent from the following description of preferred embodiments thereof, provided purely by way of a non limiting example, with reference to the accompanying figures, in which:

- figure 1 is an example of a control circuit for lighting sources according to the prior art;
- figure 2 is a block diagram of the control circuit according to the first alternative of the claimed invention;
- figure 3 is a block diagram of the control circuit according to the second alternative of the claimed invention;
- figure 4 is a circuit diagram implementing the block diagram in figure 2 in one embodiment;
- figure 5 is a diagram showing the curve of the output voltage of the voltage controller as a function of the voltage drop on the current regulation device;
- figure 6 shows the same circuit diagram in figure 4 but provided with multiple lighting branches;
- figure 7 is a circuit implementation of the block diagram in figure 3;
- figure 8 is a circuit implementation with active components of the block diagram in figure 2, which is not part of the claimed invention;
- figure 9 is a block diagram of an example of the control circuit which is not part of the claimed invention;
- figure 10 is a circuit implementation of the block diagram in the previous figure; and
- figure 11 shows an exemplary automotive headlight incorporating the control circuit of lighting sources according to the invention.

In the following description, the term "connected" refers to either a direct electrical connection between two circuits or circuit elements and to an indirect connection through one or more active or passive intermediate elements. The term "circuit" may denote either a single component or a plurality of components, active and/or passive, connected together to obtain a predetermined function. Moreover, where one can employ a bipolar junction transistor (BJT) or a field effect transistor (FET), the meaning of the terms "base", "collector", "emitter" includes the terms "gate", "drain" and "source", and vice versa. If not indicated otherwise, finally, NPN type transistors may be employed in place of PNP transistors, and vice versa.

The control circuit disclosed by the present application is adapted to control lighting sources 3 that undergo a variation of the voltage drop at their terminals during their operation, for example due to changes in temperature, or over time (for example, due to aging of the components or to a short circuit of a component), as is the case in LEDs and OLEDs.

The control circuit is able to set a node of interest at a specific voltage level, Vreg, regardless of the voltage drop at the terminals of the lighting source 3.

In particular, the voltage drop can be set on a current regulation device, which can be a simple impedance or an active component, such as a current controller, which regulates the driving current absorbed by the lighting source.

Therefore, according to the feedback current path, the control circuit can respond with different dynamics to the variations in the voltage drop to be stabilized, Vreg.

In the following description, elements common to the various embodiments of the control circuit according to the invention, or equivalent to each other, will be indicated by the same reference numerals.

Figure 2 shows a block diagram of the architecture of a control circuit according to the first alternative of the claimed invention.

The control circuit comprises a voltage supply 10 adapted to generate an output supply voltage Vout on an output terminal 102 thereof adapted to feed one or more lighting sources 3.

The voltage supply 10 may for example be implemented with a DC/DC or with an LDO.

In any case, the voltage supply 10 is of the adjustable type, i.e. has an adjustment terminal 104 accessible to be connected to an external feedback network.

In the example in figure 2, power supply 10 comprises a control loop comprising a gain block 106 and a feedback block 108. Output 108' of the feedback block is compared with an internal reference voltage Vref.

The feedback block 108 is adjustable and is accessible by means of the adjustment terminal 104.

In the example shown in figure 2, the control circuit feeds two lighting branches 12.

The driving current circulating in the lighting branches 12 is established by respective current regulation devices 14, which can be implemented with passive components, for example with a resistor, or with active components, for example with a current controller.

In the example shown in figure 2, the current regulation devices 14 are connected between the lighting branches 12 and ground, i.e. in low-side configuration. Of course, the current regulation devices 14 can be connected between the supply terminal 102 and the lighting sources 3, i.e. in high-side configuration.

In figure 2, Vreg1, Vreg2 indicate the voltage drops to be stabilized at the terminals of the current regulation devices 14 (in general, in the following description also referred to as Vregk).

Moreover, Vd1 and Vd2 indicate the voltage drops at the terminals of the lighting source 3, which may vary for the reasons described in the introductory part of the present description, for example as a function of temperature, and which result in a variation of voltage Vregk.

The control circuit comprises the non-linear feedback network 20, the output of which is operatively connected to the adjustment terminal 104, and thus to the feedback block 108 if the adjustable power supply 10.

The non-linear feedback network 20 has a transfer function H(s) variable as a function of the value of signals Vregk and Vout. The non-linear feedback network 20 therefore provides a control signal Vsw to the adjustment terminal 104 which alters the feedback block 108 so as to adjust the output power supply voltage Vout as a function of the voltage drops Vregk at the terminals of the current regulation device(s) 14.

Figure 3 shows a block diagram of the control circuit according to the second alternative of the claimed invention.

In this embodiment, the adjustable power supply 10' has a non-adjustable feedback block 108', but the adjustment terminal 104, connected to the output of the non-linear feedback network 20, acts on a reference voltage setting network that defines the value of the reference voltage Vref internal to the power supply.

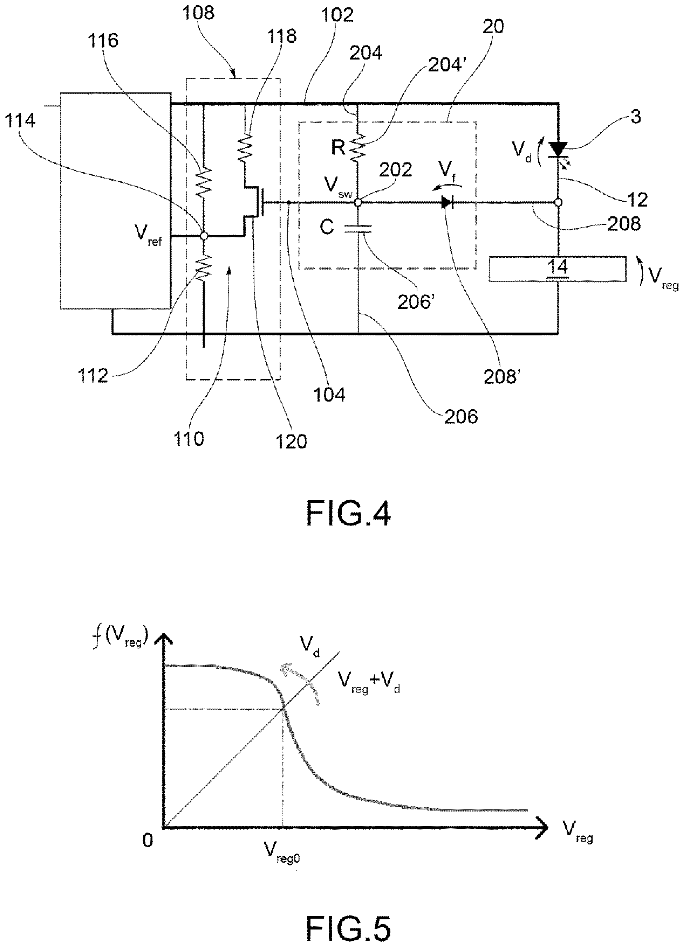

Figure 4 is a circuit diagram of an exemplary embodiment of the circuit architecture in figure 2. The current regulation device 14 is implemented with a current controller, which requires a minimum voltage drop to ensure the regulation of the current.

More in detail, the non-linear feedback network 20 comprises a feedback selector circuit having a control node 202 operatively connected to the control terminal 104, an upper branch 204 that connects the control node to the output terminal 102 of the adjustable power supply 10 by means of a feedback impedance 204', for example with a resistive element, a lower branch 206 that connects the control node 202 to ground by means of a capacitor 206', and at least one intermediate branch 208 connecting the control node 202 to the current regulation device 14 by means of at least one diode 208'.

In particular, diode 208' has its anode connected to the control node 202 and the cathode connected to the current regulation device 14 terminal which is at the voltage Vreg to be stabilized.

The feedback selector circuit thus defined implements two circuit paths for the feedback current, which are activated selectively as a function of the value Vreg, as will be described hereinafter.

The adjustable feedback block 108 of the adjustable power supply 10 comprises a voltage divider 110. This voltage divider 110 comprises a first resistor 112 between a feedback terminal 114 and ground, a second resistor 116 between the output terminal 102 of the adjustable power supply and the feedback terminal 114, and a third resistor 118 also connected between the output terminal 102 and the feedback terminal 114, but by means of an electrically adjustable impedance element 120, such as a MOS-FET, the gate terminal of which coincides with, or is operatively connected to, the feedback terminal 104.

Defining by:

Vsw the voltage on the control node 202,
Vf the forward voltage at the terminals of diode 208,
as soon as Vreg falls below level Vsw - Vf, the non-linear feedback network 20 provides a fast response by discharging capacitor 206' through diode 208' and the current regulation device 14, until the control node 202 is at the new value Vreg + Vf. Such a voltage value of the control node 202, which corresponds to the value of the control signal Vsw, causes the increase of the impedance value of the electrically adjustable impedance element 120. Consequently, the divider of the feedback block 108 is unbalanced upwards, so as to result in an increase of the output supply voltage Vout which, in turn, increases the value of Vreg.

When the Vreg exceeds Vsw - Vf, on the other hand, this triggers a slow response since diode 208' is in the high impedance status and decouples the control node 202 from the voltage drop Vreg. In this condition of the feedback selector circuit, capacitor 206' is charged through the resistive element 204'. At the charging of capacitor 206', voltage Vsw on the control node increases so as to reduce the impedance value of the electrically adjustable impedance element 120. In this way, divider 108 becomes unbalanced downwards, thus lowering the output supply voltage Vout and consequently the voltage drop to be adjusted Vreg.

The response dynamic of the feedback network 20 is in this case given by the time constant RC, where R is the resistance of the resistive element 204' and C is the capacitance of capacitor 206'.

Vreg is thus stabilized around a set-point value (Vout0, Vreg0), in which the current from the upper branch 204 of the feedback selector circuit circulates mainly in the intermediate branch 208 and only a fraction thereof flows through capacitor 206', in order to compensate for parasitic losses. The level of voltage Vsw of the control node 202 therefore remains constant.

The set-point, i.e. balance (Vout0, Vreg0), of the control circuit can thus be calculated by solving the equations

$$\begin{cases} Vout = Vref\left(1 + \dfrac{R_1 \| (R_0 + R_M(Vreg + Vf - Vref))}{R_2}\right) = f(Vreg) \\ Vreg = Vout - Vd \end{cases}$$

where Vref is the voltage on the feedback terminal 114 and Vd is the forward voltage drop on the lighting source 3.

The solution of this system of equations is shown in figure 5.

In one embodiment, in which the electrically adjustable impedance element consists of a field effect transistor, such as a MOS-FET, the value Vreg0 can be estimated as $Vreg0 = Vref + V_{GS\_TH} - Vf$, where $V_{GS\_TH}$ is the gate-source threshold voltage of the electrically adjustable impedance element 120.

It should be noted that the balance point is defined by the value of the gate-source threshold voltage $V_{GS\_TH}$.

In particular, the adjustment of the voltage drop Vreg at the terminals of the current regulation device 14 is carried out continuously due to the intrinsic characteristic of the field effect transistor MOS-FET or BJT (the resistance of the transistor, in fact, varies continuously as a function of the voltage applied between gate and source). Consequently, the second impedance 116 will always be in parallel (or, in an embodiment variant, in series) to the electrically adjustable impedance element 120.

To this end, it should be noted that in an alternative embodiment variant, the third impedance 118 could also not be present.

Due to the two different feedback dynamics, the control circuit can be adequately sensitive to the intrinsically slow decrease of the voltage drop on the lighting sources, for example due to ageing and temperature rise, and insensitive to the rapid rising edges of voltage Vreg at the terminals of the current regulation device, which are generated when a lighting source is temporarily turned off, for example in control modulation situations PWM, or during the generation of an animation sequence. In this way, a more stable output supply voltage Vout can also be obtained during a modulation PWM or an animation, resulting in improved electromagnetic performance, especially when using cables to control the lighting sources.

In a comparative example which is not part of the claimed invention, the parameters of the control circuit, in particular of the non-linear feedback network, may be set so as to achieve fast dynamics in response to an increase of the Vreg and slower dynamics in response to a lowering of the Vreg.

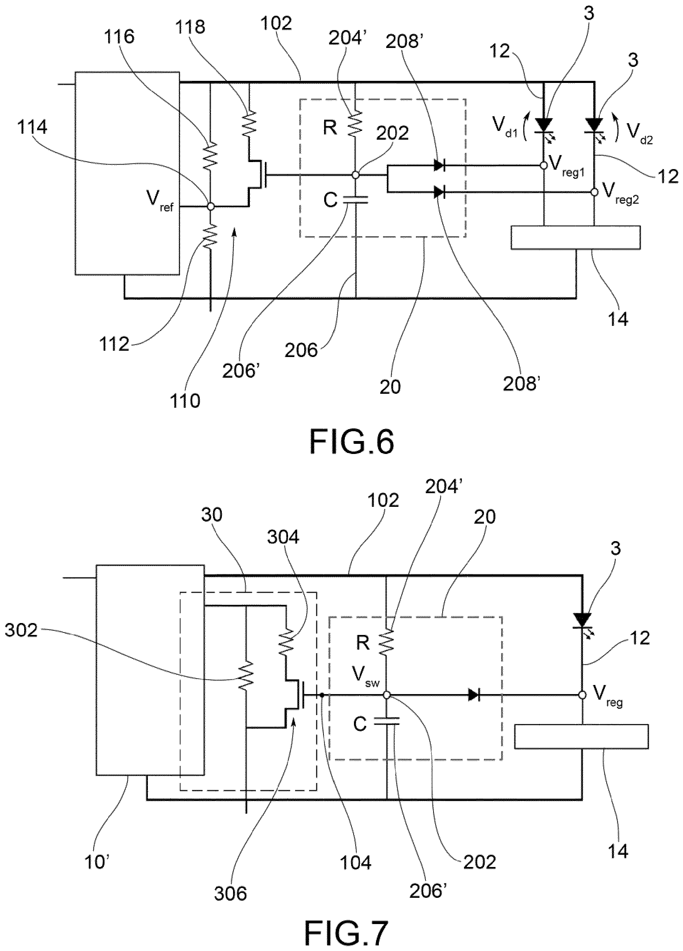

Figure 6 shows a circuitry implementation similar to that described with reference to figure 4, in which multiple lighting branches 12 are powered.

In this case, the non-linear feedback network 20 is modified by providing a diode 208' for each lighting branch 12.

The equations shown above to determine the balance point of the circuit are still valid, considering Vreg = min {Vreg1, Vreg2} and Vd = max {Vd1, Vd2}, where Vd1 and Vd2 are the voltage drops on the two lighting branches 12.

By requiring a limited number of elementary components, this architecture also represents a relatively cost-effective and reliable solution.

Moreover, if the dynamic with time constant RC is designed to be much slower than the intrinsic feedback loop of the power supply, the design of the circuit stability is facilitated by the fact that the feedback network does not interact significantly with the intrinsic feedback of the power supply.

In other words, an external feedback network which acts on the adjustable feedback block of the power supply with a slower time constant than that of the feedback loop of the power supply actually decouples the lighting branches from the feedback block of the power supply, thus allowing the lighting sources to be considered as a load rather than a part of the feedback path.

Since the output supply voltage Vout is set according to the value of Vreg, such an architecture is able to also control additional loads, without affecting the current flow of the lighting source. Therefore, the same supply voltage Vout can be used as input to additional circuits (e.g., voltage controllers).

In comparative examples which are not part of the claimed invention, the control circuit therefore comprises any decoupling tripole having a transfer function that varies in an electrically controlled, linear or non-linear manner, as a function of an input voltage or current present on the current regulation device and which acts on the feedback block of the adjustable power supply.

Such a control circuit corresponds to that shown in the block diagram in figure 2 and to a circuit implementation thereof shown in figure 4, where the feedback block consists of the output voltage divider of the adjustable power supply, formed by resistors and an electrically adjustable impedance element.

It is noted that, in comparative examples which are not part of the claimed invention, the non-linear feedback network 20 can be replaced by another feedback network, also linear, for example implemented with amplifiers, provided that its output is connected to the feedback block of the power supply.

Figure 7 shows a circuit implementation of the control circuit architecture in figure 3. Also in this case, the non-linear feedback network 20 is implemented with the feedback selector circuit described above.

However, the adjustment terminal 104 in output to the non-linear feedback network acts on a reference voltage setting network 30 defining the reference voltage internal to the adjustable power supply 10.

For example, this setting network 30 comprises a constant resistor 302 and an electrically adjustable impedance element 304, 306 connected mutually in parallel. In one embodiment, this electrically adjustable impedance element 304, 306 comprises a constant resistance element 304 placed in series to a transistor 306, for example a MOS-FET, the gate terminal whereof coincides with, or is connected to, the adjustment terminal 104, so as to be driven by the feedback network 20.

Depending on the value of voltage Vsw of the control node 202, the impedance value of the electrically adjustable impedance element 306 varies, thereby modifying the overall impedance value of the setting network 30 and therefore the value of the reference voltage internal to the power supply.

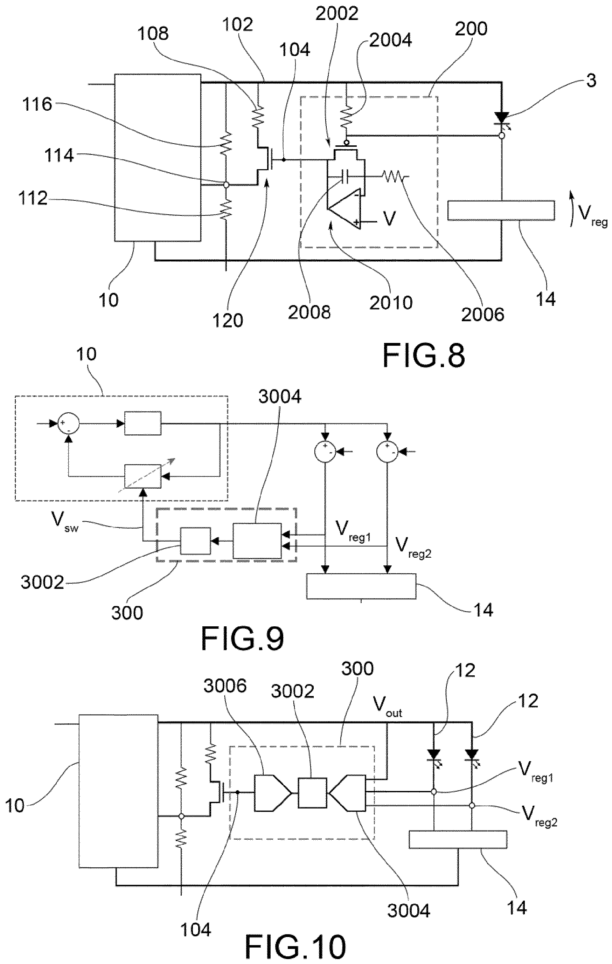

Figure 8 shows a circuit diagram similar to that in figure 4, but in which the non-linear feedback network 200 is implemented with active components.

For example, the non-linear feedback network 200 comprises a control switch 2002, in the example implemented with a P-MOS, having its gate terminal connected to the output terminal 102 of the adjustable power supply 10 by means of a resistive element 2004, and connected to the current regulation device 14, the source terminal operatively connected to the adjustment terminal 104, and the drain terminal connected to ground by means of a resistor 2006.

A capacitor 2008 is connected between the source terminal and the drain terminal.

The feedback network 200 further comprises an operational amplifier 2010 having the inverting input terminal connected to the drain terminal, the non-inverting input terminal to a reference voltage V, and the output terminal connected to the source terminal.

In this way, when the voltage at the terminals of the current regulation device 14 falls below the voltage value given, with good approximation, by the difference between the voltage of the source terminal and the gate-source threshold voltage of the control switch 2002, the channel resistance of such a control switch reduces rapidly so as to quickly discharge capacitor 2008 placed between source and drain. In this way, the output of operational amplifier 2010, and then the control node voltage value, varies rapidly. Due to the action of the control signal present on the control node, the value of the output supply voltage also rapidly increases.

When the voltage at the terminals of the current control device exceeds the voltage value given by the difference between the voltage of the source terminal and the gate-source threshold voltage of the P-MOS, the P-MOS is cut off and the output of the operational amplifier, and thus the value of the control node voltage, varies according to the time constant RC given by the resistor connected between the inverting terminal of the amplifier and ground, and by the capacitor placed between drain and source. Due to the action of the control signal present on the control node, the value of the output supply voltage also rapidly decreases according to such a dynamic.

In this way, a fast response of the control circuit can be obtained when the Vreg drops too much, in order to instantaneously restore the output voltage Vout, while a slower response can be obtained to decrease the output voltage Vout when necessary.

Figure 9 shows a block diagram similar to that in figure 2, thus with a non-linear feedback network acting on an adjustable feedback block 108 of the adjustable power supply 10, where the non-linear feedback network, indicated with 300, is based on a microprocessor 3002 and on a detection network 3004 of the voltage drops Vregk at the terminals of the current regulation device 14.

A possible implementation of the diagram in figure 9 is shown in figure 10, in which a multichannel analog-digital converter ADC 3004 is used to detect the multiple signals Vregk and Vout, while a digital-analog converter DAC 3006 is used to generate the adjustment signal Vsw.

In this case, the non-linear feedback is implemented by the internal code of microprocessor 3002, which generates the adjustment signal Vsw as a function of the detected signals Vregk and Vout.

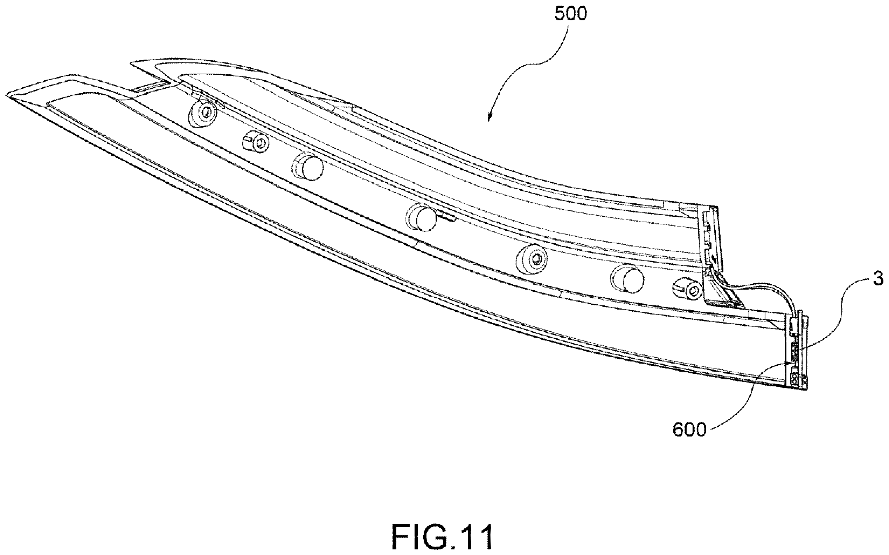

With reference to the example shown in figure 11, an object of the present invention is also an automotive headlight 500 provided with a control circuit 600 of lighting sources, such as LED or OLED.

A man skilled in the art may make several changes, adjustments, adaptations and replacements of elements with other functionally equivalent ones to the embodiments of the control circuit.

In an example, which is not part of the claimed invention, the feedback selector circuit that implements the non-linear feedback network may be connected to a voltage different from the supply voltage Vout, provided that the voltage on the resistive element of the selector circuit is greater than the voltage of the control node.

## Claims

1. Control circuit of light sources, comprising:

   - an adjustable voltage power supply unit (10; 10'), having an output terminal (102) and an accessible regulation terminal (104) to regulate the value of an output power supply voltage (Vout),

      provided by the adjustable voltage power supply unit at the output terminal;
      the power supply unit (10; 10') comprising an internal feedback control loop (108) for comparing the value of the output power supply voltage (Vout) with an internal reference voltage (Vref), the regulation terminal acting on the internal feedback control loop (108) or on a reference voltage setting network that defines the value of the internal reference voltage (Vref);

      - at least one lighting branch (12) powered by said output power supply voltage, said at least one lighting branch (12) comprising at least one light source (3);
      - a respective current regulation device (14) connected in series to the respective at least one lighting branch (12) and suitable to adjust the driver current circulating in said lighting branch;
      - a non-linear feedback network (20; 200; 300) which provides a regulation signal (Vsw) to said regulation terminal (104), said non-linear feedback network having a transfer function which varies according to the

      lowest among the voltage drops
      (Vreg) at the ends of each of the current regulation devices, said transfer function being suitable to modify the value of the output power supply voltage (Vout) to restore the voltage drop at the ends of each of the current regulation devices (14) to a predetermined value (Vreg0) with at least two different dynamics of the transfer function depending on whether the lowest among the voltage drops at the ends of each of the current regulation devices is greater or smaller than said predetermined value,

   wherein the non-linear feedback network comprises a feedback selector circuit having a control node (202) operatively connected to the regulation terminal (104), an upper branch (204) which connects the control node (202) to the output terminal of the adjustable power supply unit by means of a feedback impedance (204'), a lower branch (206) which connects the control node to earth by means of a capacitor (206'), and at least one intermediate branch (208) which connects the control node to each respective current regulation device (14) by means of a respective diode (208'), so that:

      - when the voltage (Vreg) at the ends of at least one of the current regulation devices (14) falls below a voltage value given by the difference between the voltage of the control node (Vsw) and the direct voltage (Vf) at the ends of the respective diode (208'), the capacitor (206') discharges via the respective diode (208') and the respective current regulation device (14);
      - when the voltages at the ends of the at least one current regulation devices (14) exceed the voltage value given by the difference between the voltage of the control node (Vsw) and the direct voltage (Vf) at the ends of the respective diode (208'), the respective diodes (208') enter the impedance state enabling the capacitor (206') to recharge via the feedback impedance (204'),

   wherein the feedback impedance (204') and the capacitor (206') define the time constant of the non-linear feedback network (20; 200; 300), the time constant being chosen such that the dynamic of the transfer function of the non-linear feedback network with said time constant is much slower than the dynamic of the internal feedback control loop (108) of the power supply unit.

2. Control circuit according to claim 1, wherein said

transfer function of the
non-linear feedback network (20; 200; 300) has a fast dynamic in the case of lowering the voltage drop (Vreg) at the ends of the current regulation device (14) below the predetermined value, and a slow dynamic in the case of increasing the voltage drop (Vreg) at the ends of the current regulation device (14) beyond said predetermined value, the slow dynamic being chosen in such a way that an on-off modulation of the driver current of the at least one light source,
for example for a PWM power supply mode of the respective
lighting branch, is not regulated by the non-linear feedback network.

3. Control circuit according to the first alternative of claim 1 wherein the regulation terminal acts on the internal feedback control loop (108) or according to claim 2 when dependent on said first alternative of claim 1, wherein the internal feedback control loop comprises a gain block (106) and a feedback block (108), said internal feedback control loop being configured to compare the output (108') of the feedback block with the internal reference voltage (Vref), wherein said feedback block (108) is accessible from the outside for its regulation by means of said regulation terminal (104).

4. Control circuit according to any one of the preceding claims, where the internal feedback control loop of the adjustable power supply unit (10) comprises an electrically adjustable impedance element (120) having a regulation terminal (104) connected to the output of the non-linear feedback network (20; 200; 300) and by means of which it is possible to change the impedance value of said electrically adjustable impedance element based on the regulation signal (Vsw) provided by the non-linear feedback network as a function of the voltage drops (Vreg) at the ends of the respective current regulation devices (14).

5. Control circuit according to the preceding claim, wherein the internal feedback control loop of the adjustable power supply unit (10) comprises a voltage divider (108), comprising a first impedance (112) between a feedback terminal (114) and earth and a second impedance (116, 120) between the output terminal (102) of the adjustable power supply unit and the feedback terminal (114), said second impedance comprising a constant impedance (116) and the electrically adjustable impedance element (120).

6. Control circuit according to the second alternative of claim 1 wherein the regulation terminal acts on the reference voltage setting network that defines the value of the internal reference voltage (Vref) or according to claim 2 when dependent on said second alternative of claim 1, wherein said reference voltage setting network (30) comprises an electrically adjustable impedance element (306) connected to the regulation terminal (104) which is connected to the output of the non-linear feedback network and by means of which it is possible to vary the impedance value of the electrically adjustable impedance element based on
the regulation signal (Vsw) provided by the non-linear feedback network as a function of the voltage drops at the ends of the respective current regulation devices (14).

7. Control circuit according to the preceding claim, in which the reference voltage setting network (30) comprises a constant impedance (302) and the electrically adjustable impedance element (306), connected in parallel.

8. Control circuit according to any of the claims 4-7, where the electrically adjustable impedance element is a transistor.

9. Control circuit according to any of the claims 5-8 in which said constant impedance consists of a resistor.

10. Control circuit according to any of the claims 5-8 in which said constant impedance consists of a capacitor with varicap.

11. Vehicle light, comprising a control circuit of lighting sources according to any of the claims from 1 to 10.

**Patentansprüche**

1. Steuerschaltung von Lichtquellen, umfassend:

- eine Energieversorgungseinheit (10; 10') mit einstellbarer Spannung, welche einen Ausgangsanschluss (102) und einen erreichbaren Regulierungsanschluss (104) aufweist, um den Wert einer Ausgangsenergieversorgungsspannung (Vout) zu regulieren, welche durch die Energieversorgungseinheit mit einstellbarer Spannung an dem Ausgangsanschluss bereitgestellt ist; wobei die Energieversorgungseinheit (10; 10') einen Steuer-/Regelkreis (108) mit interner Rückkopplung zum Vergleichen des Werts der Ausgangsenergieversorgungsspannung (Vout) mit einer internen Referenzspannung (Vref) umfasst, wobei der Regulierungsanschluss auf den Steuer-/Regelkreis (108) mit interner Rückkopplung oder auf ein Referenzspannung-Festlegungsnetzwerk wirkt, welches den Wert der internen Referenzspannung (Vref) definiert;

- wenigstens einen Lichtzweig (12), welcher durch die Ausgangsenergieversorgungsspannung mit Energie versorgt wird, wobei der wenigstens eine Lichtzweig (12) wenigstens eine Lichtquelle (3) umfasst;

- eine jeweilige Stromregulierungsvorrichtung (14), welche in Reihe mit dem jeweiligen wenigstens einen Lichtzweig (12) geschaltet ist und dazu geeignet ist, den Treiberstrom einzustellen, welcher in dem Lichtzweig zirkuliert;

- ein nicht-lineares Rückkopplungsnetzwerk (20; 200; 300), welches ein Regulierungssignal (Vsw) für den Regulierungsanschluss (104) bereitstellt, wobei das nicht-lineare Rückkopplungsnetzwerk eine Übertragungsfunktion aufweist, welche gemäß dem niedrigsten unter den Spannungsabfällen (Vreg) an den Enden jeder der Stromregulierungsvorrichtungen variiert, wobei die Übertragungsfunktion dazu geeignet ist, den Wert der Ausgangsenergieversorgungsspannung (Vout) zu modifizieren, um den Spannungsabfall an den Enden jeder der Stromregulierungsvorrichtungen (14) auf einen vorbestimmten Wert (Vreg0) wiederherzustellen, wobei wenigstens zwei verschiedene Dynamiken der Übertragungsfunktion davon abhängig sind, ob der niedrigste unter den Spannungsabfällen an den Enden jeder der Stromregulierungsvorrichtungen größer oder kleiner als der vorbestimmte Wert ist,

wobei das nicht-lineare Rückkopplungsnetzwerk eine Rückkopplungsauswahlschaltung, welche einen Steuer-/Regelknoten (202) aufweist, welcher betriebsmäßig mit dem Regulierungsanschluss (104) verbunden ist, einen oberen Zweig (204), welcher den Steuer-/Regelknoten (202) mittels einer Rückkopplungsimpedanz (204') mit dem Ausgangsanschluss der Energieversorgungseinheit mit einstellbarer Spannung verbindet, einen unteren Zweig (206), welcher den Steuer-/Regelknoten mittels eines Kondensators (206') mit einer Erdung verbindet, und wenigstens einen Zwischenzweig (208) umfasst, welcher den Steuer-/Regelknoten mittels einer jeweiligen Diode (208') mit jeder jeweiligen Stromregulierungsvorrichtung (14) verbindet, so dass:

- wenn die Spannung (Vreg) an den Enden wenigstens einer der Stromregulierungsvorrichtungen (14) unter einen Spannungswert fällt, welcher durch die Differenz zwischen der Spannung des Steuer-/Regelknotens (Vsw) und der Gleichspannung (Vf) an den Enden der jeweiligen Diode (208') gegeben ist, sich der Kondensator (206') über die jeweilige Diode (208') und die jeweilige Stromregulierungsvorrichtung (14) entlädt;

- wenn die Spannungen an den Enden der wenigstens einen Stromregulierungsvorrichtung (14) den Spannungswert überschreiten, welcher durch die Differenz zwischen der Spannung des Steuer-/Regelknotens (Vsw) und der Gleichspannung (Vf) an den Enden der jeweiligen Diode (208') gegeben ist, die jeweiligen Dioden (208') in den Impedanzzustand gelangen, welcher ermöglicht, dass sich der Kondensator (206') über die Rückkopplungsimpedanz (204') wieder auflädt,

wobei die Rückkopplungsimpedanz (204') und der Kondensator (206') die Zeitkonstante des nicht-linearen Rückkopplungsnetzwerks (20; 200; 300) definieren, wobei die Zeitkonstante derart ausgewählt ist, dass die Dynamik der Übertragungsfunktion des nicht-linearen Rückkopplungsnetzwerks mit der Zeitkonstante viel langsamer als die Dynamik des Steuer-/Regelkreises (108) mit interner Rückkopplung der Energieversorgungseinheit ist.

2. Steuerschaltung nach Anspruch 1, wobei die Übertragungsfunktion des nicht-linearen Rückkopplungsnetzwerks (20; 200; 300) in dem Fall eines Verringerns des Spannungsabfalls (Vreg) an den Enden der Stromregulierungsvorrichtung (14) unter den vorbestimmten Wert eine schnelle Dynamik aufweist und in dem Fall eines Erhöhens des Spannungsabfalls (Vreg) an den Enden der Stromregulierungsvorrichtung (14) über den vorbestimmten Wert eine langsame Dynamik aufweist, wobei die langsame Dynamik in einer derartigen Weise ausgewählt ist, dass eine Ein-Aus-Modulation des Treiberstroms der wenigstens einen Lichtquelle, zum Beispiel für einen PWM-Energieversorgungsmodus des jeweiligen Lichtzweigs, nicht durch das nicht-lineare Rückkopplungsnetzwerk reguliert wird.

3. Steuerschaltung nach der ersten Alternative von Anspruch 1, wobei der Regulierungsanschluss auf den Steuer-/Regelkreis (108) mit interner Rückkopplung wirkt, oder nach Anspruch 2, wenn abhängig von der ersten Alternative von Anspruch 1, wobei der Steuer-/Regelkreis mit interner Rückkopplung einen Verstärkungsblock (106) und einen Rückkopplungsblock (108) umfasst, wobei der Steuer-/Regelkreis mit interner Rückkopplung dazu eingerichtet ist, den Ausgang (108') des Rückkopplungsblocks mit der internen Referenzspannung (Vref) zu vergleichen, wobei der Rückkopplungsblock (108) für seine Regulierung mittels des Regulierungsanschlusses (104) von dem Äußeren erreichbar ist.

**4.** Steuerschaltung nach einem der vorhergehenden Ansprüche, wobei der Steuer-/Regelkreis mit interner Rückkopplung der einstellbaren Energieversorgungseinheit (10) ein elektrisch einstellbares Impedanzelement (120) umfasst, welches einen Regulierungsanschluss (104) aufweist, welcher mit dem Ausgang des nicht-linearen Rückkopplungsnetzwerks (20; 200; 300) verbunden ist und mittels welchem es möglich ist, den Impedanzwert des elektrisch einstellbaren Impedanzelements auf Grundlage des Regulierungssignals (Vsw), welches durch das nicht-lineare Rückkopplungsnetzwerk bereitgestellt ist, als eine Funktion der Spannungsabfälle (Vreg) an den Enden der jeweiligen Stromregulierungsvorrichtungen (14) zu ändern.

**5.** Steuerschaltung nach dem vorhergehenden Anspruch, wobei der Steuer-/Regelkreis mit interner Rückkopplung der einstellbaren Energieversorgungseinheit (10) einen Spannungsteiler (108) umfasst, welcher eine erste Impedanz (112) zwischen einem Rückkopplungsanschluss (114) und einer Erdung und eine zweite Impedanz (116, 120) zwischen dem Ausgangsanschluss (102) der einstellbaren Energieversorgungseinheit und dem Rückkopplungsanschluss (114) umfasst, wobei die zweite Impedanz eine konstante Impedanz (116) und das elektrisch einstellbare Impedanzelement (120) umfasst.

**6.** Steuerschaltung nach der zweiten Alternative von Anspruch 1, wobei der Regulierungsanschluss auf das Referenzspannung-Festlegungsnetzwerk wirkt, welches den Wert der internen Referenzspannung (Vref) definiert, oder nach Anspruch 2, wenn abhängig von der zweiten Alternative von Anspruch 1, wobei das Referenzspannung-Festlegungsnetzwerk (30) ein elektrisch einstellbares Impedanzelement (306) umfasst, welches mit dem Regulierungsanschluss (104) verbunden ist, welcher mit dem Ausgang des nicht-linearen Rückkopplungsnetzwerks verbunden ist und mittels welchem es möglich ist, den Impedanzwert des elektrisch einstellbaren Impedanzelements auf Grundlage des Regulierungssignals (Vsw), welches durch das nicht-lineare Rückkopplungsnetzwerk bereitgestellt ist, als eine Funktion der Spannungsabfälle an den Enden der jeweiligen Stromregulierungsvorrichtungen (14) zu variieren.

**7.** Steuerschaltung nach dem vorhergehenden Anspruch, wobei das Referenzspannung-Festlegungsnetzwerk (30) eine konstante Impedanz (302) und das elektrisch einstellbare Impedanzelement (306) umfasst, welche parallel geschaltet sind.

**8.** Steuerschaltung nach einem der Ansprüche 4-7, wobei das elektrisch einstellbare Impedanzelement ein Transistor ist.

**9.** Steuerschaltung nach einem der Ansprüche 5-8, wobei die konstante Impedanz aus einem Widerstand besteht.

**10.** Steuerschaltung nach einem der Ansprüche 5-8, wobei die konstante Impedanz aus einem Kondensator mit Kapazitätsdiode besteht.

**11.** Fahrzeuglicht, umfassend eine Steuerschaltung von Lichtquellen nach einem der Ansprüche von 1 bis 10.

**Revendications**

**1.** Circuit de commande de sources lumineuses, comprenant :

- une unité d'alimentation électrique (10 ; 10') à tension réglable, ayant une borne de sortie (102) et une borne de régulation (104) accessible permettant de réguler la valeur d'une tension d'alimentation électrique de sortie (Vout), fournie par l'unité d'alimentation électrique à tension réglable au niveau de la borne de sortie ;
l'unité d'alimentation électrique (10 ; 10') comprenant une boucle de commande à rétroaction interne (108) destinée à comparer la valeur de la tension d'alimentation électrique de sortie (Vout) avec une tension de référence interne (Vref), la borne de régulation agissant sur la boucle de commande à rétroaction interne (108) ou sur un réseau de définition de tension de référence qui définit la valeur de la tension de référence interne (Vref) ;
- au moins une branche d'éclairage (12) alimentée par ladite tension d'alimentation électrique de sortie, ladite au moins une branche d'éclairage (12) comprenant au moins une source lumineuse (3) ;
- un dispositif de régulation de courant (14) respectif connecté en série à l'au moins une branche d'éclairage (12) respective et approprié pour régler le courant d'attaque circulant dans ladite branche d'éclairage ;
- un réseau à rétroaction non linéaire (20 ; 200 ; 300) qui fournit un signal de régulation (Vsw) à ladite borne de régulation (104), ledit réseau à rétroaction non linéaire ayant une fonction de transfert qui varie en fonction de la plus basse parmi les chutes de tension (Vreg) aux extrémités de chacun des dispositifs de régulation de courant, ladite fonction de transfert étant appropriée pour modifier la valeur de la tension d'alimentation électrique de sortie (Vout) de manière à restaurer la chute de tension aux extrémités de chacun des dispositifs de régulation de courant (14) à une valeur prédéterminée (Vreg0) avec au moins deux dynamiques différentes de la fonction de transfert en fonction du fait que la plus basse parmi les chutes de tension aux extrémités de chacun des dispositifs de régulation de courant soit supérieure ou inférieure à ladite valeur prédéterminée, le réseau à rétroaction non linéaire comprenant un circuit de sélecteur à rétroaction ayant un noeud de commande (202) connecté de manière fonctionnelle à la borne de régulation (104), une branche supérieure (204) qui connecte le noeud de commande (202) à la borne de sortie de l'unité d'alimentation électrique réglable au moyen d'une impédance de rétroaction (204'), une branche inférieure (206) qui connecte le noeud de commande à la terre au moyen d'un condensateur (206'), et au moins une branche intermédiaire (208) qui connecte le noeud de commande à chaque dispositif de régulation de courant (14) respectif au moyen d'une diode (208') respective, de telle sorte que :

- lorsque la tension (Vreg) aux extrémités d'au moins un des dispositifs de régulation de courant (14) chute en-dessous d'une valeur de tension donnée par la différence entre la tension du noeud de commande (Vsw) et la tension continue (Vf) aux extrémités de la diode (208') respective, le condensateur (206') se décharge par l'intermédiaire de la diode (208') respective et du dispositif de régulation de courant (14) respectif ;
- lorsque les tensions aux extrémités de l'au moins un des dispositifs de régulation de courant (14) excède la valeur de tension donnée par la différence entre la tension du noeud de commande (Vsw) et la tension continue (Vf) aux extrémités de la diode (208') respective, les diodes (208') respectives entrent dans l'état d'impédance permettant au condensateur (206') de se recharger par l'intermédiaire de l'impédance de rétroaction (204'),

l'impédance de rétroaction (204') et le condensateur (206') définissant la constante de temps du réseau à rétroaction non linéaire (20 ; 200 ; 300), la constante de temps étant choisie de telle sorte que la dynamique de la fonction de transfert du réseau à rétroaction non linéaire avec ladite constante de temps soit bien plus lente que la dynamique de la boucle de commande à rétroaction interne (108) de l'unité d'alimentation électrique.

2. Circuit de commande selon la revendication 1, ladite fonction de transfert du réseau à rétroaction non linéaire (20 ; 200 ; 300) ayant une dynamique rapide dans le cas d'une diminution de la chute de tension (Vreg) aux extrémités du dispositif de régulation de courant (14) en-dessous de la valeur prédéterminée, et une dynamique lente dans le cas d'une augmentation de la chute de tension (Vreg) aux extrémités du dispositif de régulation de courant (14) au-delà de ladite valeur prédéterminée, la dynamique lente étant choisie de telle sorte qu'une modulation marche-arrêt du courant d'attaque de l'au moins une source lumineuse, par exemple pour un mode d'alimentation électrique à modulation d'impulsions en durée de la branche d'éclairage respective, ne soit pas régulée par le réseau à rétroaction non linéaire.

3. Circuit de commande selon la première variante de la revendication 1, la borne de régulation agissant sur la boucle de commande à rétroaction interne (108), ou selon la revendication 2 lorsqu'elle est dépendante de ladite première variante de la revendication 1, la boucle de commande à rétroaction interne comprenant un bloc de gain (106) et un bloc de rétroaction (108), ladite boucle de commande à rétroaction interne étant configurée de manière à comparer la sortie (108') du bloc de rétroaction avec la tension de référence interne (Vref), ledit bloc de rétroaction (108) étant accessible à partir de l'extérieur en vue de sa régulation au moyen de ladite borne de régulation (104).

4. Circuit de commande selon l'une quelconque des revendications précédentes, la boucle de commande à rétroaction interne de l'unité d'alimentation électrique (10) réglable comprenant un élément d'impédance (120) électriquement réglable ayant une borne de régulation (104) connectée à la sortie du réseau à rétroaction non linéaire (20 ; 200 ; 300) et au moyen duquel il est possible de changer la valeur d'impédance dudit élément d'impédance électriquement réglable sur la base du signal de régulation (Vsw) fourni par le réseau à rétroaction non linéaire en fonction des chutes de tension (Vreg) aux extrémités des dispositifs de régulation de courant (14) respectifs.

5. Circuit de commande selon la revendication précédente, la boucle de commande à rétroaction interne de l'unité d'alimentation électrique (10) réglable comprenant un réducteur de tension (108), comprenant une première impédance (112) entre une borne de rétroaction (114) et la terre et une deuxième impédance (116, 120) entre la borne de sortie (102) de l'unité d'alimentation électrique réglable et la borne de rétroaction (114), ladite deuxième impédance comprenant une impédance constante (116) et l'élément d'impédance (120) électriquement réglable.

**6.** Circuit de commande selon la deuxième variante de la revendication 1, la borne de régulation agissant sur le réseau de définition de tension de référence qui définit la valeur de la tension de référence interne (Vref), ou selon la revendication 2 lorsqu'elle est dépendante de ladite deuxième variante de la revendication 1, ledit réseau de définition de tension de référence (30) comprenant un élément d'impédance (306) électriquement réglable connecté à la borne de régulation (104) qui est connectée à la sortie du réseau à rétroaction non linéaire et au moyen duquel il est possible de varier la valeur d'impédance de l'élément d'impédance électriquement réglable sur la base du signal de régulation (Vsw) fourni par le réseau à rétroaction non linéaire en fonction des chutes de tension aux extrémités des dispositifs de régulation de courant (14) respectifs.

**7.** Circuit de commande selon la revendication précédente, dans lequel le réseau de définition de tension de référence (30) comprend une impédance constante (302) et l'élément d'impédance (306) électriquement réglable, connectés en parallèle.

**8.** Circuit de commande selon l'une quelconque des revendications 4 à 7, où l'élément d'impédance électriquement réglable est un transistor.

**9.** Circuit de commande selon l'une quelconque des revendications 5 à 8, dans lequel ladite impédance constante est constituée d'une résistance.

**10.** Circuit de commande selon l'une quelconque des revendications 5 à 8, dans lequel ladite impédance constante est constituée d'un condensateur doté d'un varicap.

**11.** Phare de véhicule, comprenant un circuit de commande de sources lumineuses selon l'une quelconque des revendications 1 à 10.

FIG.1

FIG.2

FIG.3

FIG.4

FIG.5

FIG.6

FIG.7

FIG.8

FIG.9

FIG.10

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016302270 A
- US 2010327835 A1
- US 2006108933 A1
- US 2010134040 A1
- WO 2013076685 A1
- EP 3258745 A1
- US 2007273681 A1